# EUROPEAN PATENT APPLICATION

(11) **EP 4 596 216 A1**
(43) Date of publication of application: **06.08.2025**
(21) Application number: 24154847.8
(22) Date of filing: 30.01.2024
(51) Int. Cl.: B29C 53/04, B29C 45/16

(54) **METHOD FOR PRODUCING AN AUTOMOTIVE VEHICLE PART**

(71) Applicant: SMP Deutschland GmbH, 79268 Bötzingen (DE); AUDI AG, 85057 Ingolstadt (DE)
(72) Inventor: Rinderlin, Jürgen, 79211 Denzlingen (DE); Sepp, Benjamin, 77723 Gengenbach (DE); Kugele, Daniel, 85051 Ingolstadt (DE); Deppner, Werner, 85055 Ingolstadt (DE); Schmatz, Jörg, 85419 Mauern (DE); Seckler, Jörg, 86551 Aichach (DE); Pickl, Richard, 85095 Denkendorf (DE)
(74) Representative: Westphal, Mussgnug & Partner Patentanwälte mbB

(57) **Abstract**

Provided is method for producing an automotive vehicle part (1, 2, 3, 4, 5) which automotive vehicle part (1, 2, 3, 4, 5) has at least one inclined surface (11, 21, 31, 41, 46, 51), wherein the surface material of a surface area that is either located adjacent to the upper part of said at least one inclined surface (11, 21, 31, 41, 46, 51) or that forms at least an upper part of said at least one inclined surface (11, 21, 31, 41, 46, 51) is a first material (13, 23, 33, 43, 53), and wherein the surface material of a surface area that is either located adjacent to the lower part of said at least one inclined surface (11, 21, 31, 41, 46, 51) or that forms the lower part of said at least one inclined surface (11, 21, 31, 41, 46, 51) is a second material (15, 25, 35, 45, 55) which is different from the first material (13, 23, 33, 43, 53), wherein the first material (13, 23, 33, 43, 53) and the second material (15, 25, 35, 45, 55) are in contact with each other in such a way that a clear, sharp separation edge or borderline is formed between said first material (13, 23, 33, 43, 53) and said second material (15, 25, 35, 45, 55), wherein the method comprises the step of creating a flow-stopping structure (12, 22, 32, 42a, 42b, 52, 56) at the location where the clear, sharp separation edge is to be formed, wherein this formation is performed prior to a coating step during which the first material (13, 23, 33, 43, 53) is applied.

## Description

One typical step in the production of parts for an automotive vehicle is the application of a coating, e.g. a varnish, ink, paint or a paste to a surface of the "raw" part. Whereas this process can be performed with high precision in a controlled way on plane surfaces, problems arise if the surface to be coated comprises inclined surface areas, which is often the case for technical or decorative reasons. Due to the surface inclination of the surface, downhill-slope forces act on the coating material, which is typically some type of liquid, the coating material starts running down the slope, leading to varying thickness of the coating material on the inclined surface. Such a thickness variation is disturbing when the surface of the finished automotive vehicle part is to be coated with a single material; but for design purposes in many cases it is desirable to provide the automotive vehicle part with different surface materials, e.g. different colours which are clearly separated from each other.

However, if the separation edge or borderline between two surface areas of the automotive vehicle part with different surface materials is located on or adjacent to an inclined surface, using the currently known techniques it proves to be essentially impossible to create a clear, sharp separation line between these surface areas due to the occurrence of bleeding through or overflowing coating material.

At first sight, a viable approach to solve this problem might appear to be performing a complete coating with a first coating material and removing the first coating material in areas where the second material is to be located in a defined way, e.g. with a laser. It turns out, however, that especially for automotive vehicle parts that are made of plastic (which is the case for an increasing number of automotive vehicle parts) this approach does not solve the problem in an adequate way. Due to the different coating thicknesses that is caused during the coating of the inclined surfaces with the first material, subsequent removal of this coating, e.g. by a laser, is not possible without creating new problems - either because coating residues remain in areas where the coating thickness is increased or too much laser energy is applied because the coating thickness is too thin, leading to stresses in the component or burning of the surface.

Accordingly, the problem to be solved by the invention is providing an improved method for producing an automotive vehicle part with a clear, sharp borderline between two surface areas of the automotive vehicle part with different surface materials even if this borderline is located on or adjacent to an inclined surface.

This problem is solved by a method with the features of claim 1. Advantageous embodiments of the method are provided in the dependent claims.

The method according to the invention is a method for producing an automotive vehicle part which automotive vehicle part has at least one inclined surface, wherein the surface material of a surface area that is either located adjacent to the upper part of said at least one inclined surface or that forms at least an upper part of said at least one inclined surface is a first material, and wherein the surface material of a surface area that is either located adjacent to the lower part of said at least one inclined surface or that forms the lower part of said at least one inclined surface is a second material which is different from the first material, wherein the first material and the second material are in contact with each other in such a way that a clear, sharp separation edge or borderline is formed between said first material and said second material.

It should be noted that the second material may be a different coating material, but may also be the material of the "raw" automotive vehicle part. Such "raw" vehicle parts are frequently, but not necessarily made from synthetic materials, especially plastics. Many of them components comprise polycarbonates (PC), as these are strong materials that can be moulded, thermoformed and worked to obtain a "raw" vehicle part which is according to the invention subsequently coated partly by at least the first material.

The upward and downward direction are typically determined by the direction from which the coating is applied and thus the orientation of the vehicle part when the coating is applied, which is typically applied in a downward direction.

By this definition, it is clear that the first material is the one whose reaction to the downhill-slope forces may cause the lack of precision regarding the formation of the border line in the prior art.

An essential step of the method according to the invention, which avoids such problems, is step of creating a flow-stopping structure at the location where the clear, sharp separation edge is to be formed, wherein this formation is performed prior to a coating step during which the first material is applied. This flow-stopping structure allows to define the geometry of the borderline between the first material and the second material precisely and prevents bleeding through or overflowing.

The flow-stopping structure can be created for example by forming an edge, an embossing, a line, a rib or an elevation.

It can be advantageous from the point of view of process economy if the flow-stopping structure is integrated into the raw automotive vehicle part and created during the fabrication of the raw automotive vehicle part. In other words, this means that the flow stopping structure is integrated into the shape of the raw automotive vehicle part to be formed according to this embodiment of the invention.

Alternatively, it can also be advantageous in some cases, to form the flow-stopping structure is formed from a different material than the base material of the raw automotive vehicle part. This can be achieved e.g. if the flow-stopping structure is formed using 2k-injection moulding techniques. However, it is also possible to produce the flow-stopping structure in a separate process and attach it prior to the coating with at least the first material, which can be useful e.g. if different variants of the automotive vehicle parts use different first materials for coating which require flow-stopping structures that are shaped differently.

The first material is preferably an ink, a paste, a varnish or paint. The second material can also be an ink, a paste, a varnish or paint, but it can also be the material of the raw automotive vehicle part and is not necessarily added to the raw automotive vehicle part after its creation.

High quality backlighting effects can be obtained by application of the method according to the invention if the second material is transparent or translucent.

Preferably, the raw automotive vehicle part is formed by injection moulding and flooded with polyurethane. By doing so, markings on the opposite side of the part can be reduced, counteracted or avoided completely.

Next, the invention is explained in more detail using figures that illustrate specific embodiments as an example. The figures show:
- Fig. 1:: A first possible intermediate state during the production of an automotive vehicle part comprising an inclined surface;
- Fig. 2:: a second possible intermediate state during the production of an automotive vehicle part comprising an inclined surface;
- Fig. 3:: a third possible intermediate state during the production of an automotive vehicle part comprising an inclined surface;
- Fig. 4:: a fourth possible intermediate state during the production of an automotive vehicle part comprising an inclined surface; and
- Fig. 5:: a fifth possible intermediate state during the production of an automotive vehicle part comprising an inclined surface.

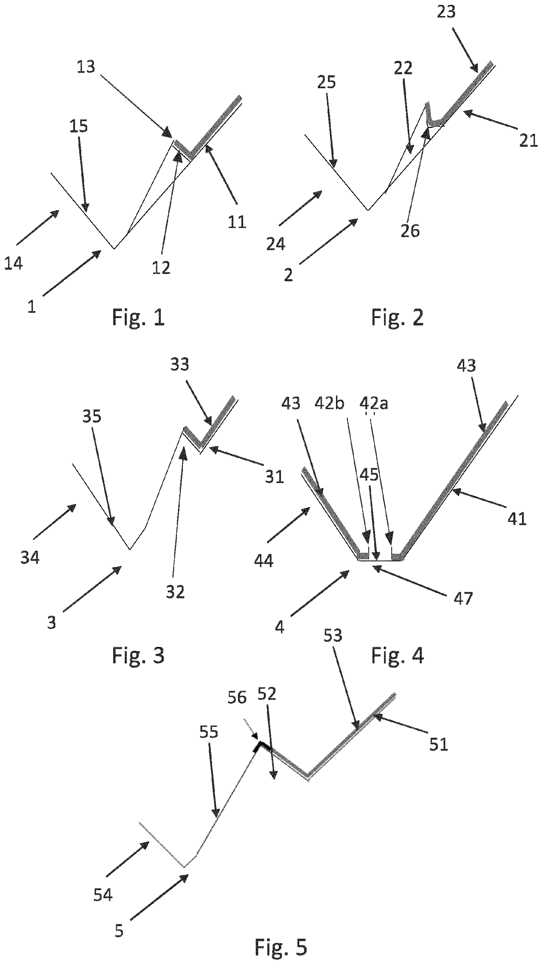

In all of figures 1 to 5, only a part of the automotive vehicle part 1, 2, 3, 4, 5 is shown, more specifically a part which comprises at least a part of at least one inclined surface 11, 21, 31, 41, 51. Also, in the intermediate state that is depicted in all of figures 1 to 5, at least one flow-stopping structure 12, 22, 32, 42a, 42b, 52 has already been added to the automotive vehicle part 1, 2, 3, 4, 5 at the location where the clear, sharp separation edge between a first material 13, 23, 33, 43, 53 and a second material is to be located.

Likewise, in the intermediate state depicted in all of figures 1 to 5, the first material 13, 23, 33, 43, 53 has been added in a coating step which was performed after the addition of the flow-stopping structure 12, 22, 32, 42a, 42b, 52 and effectively stopped by the flow-stopping structure 12, 22 32, 42a, 42b, 52.

In the situation shown in figures 1 to 5, the second material 15, 25, 35, 45, 55 is currently the material of the raw automotive vehicle component 14, 24, 34, 44, 54, but may be replaced by another second material, e.g. by coating, at a later point of time.

In the embodiment of figure 1, the flow-stopping structure 12 is a wedge-shaped structure that has been added to the base material of the raw vehicle part 14 and is made of a different material. The tip of the wedge-shaped structure faces in the downward direction of the inclined surface 11; accordingly its face opposite of said tip forms an edge 15 that stops the first material 13 from flowing down.

In a similar way as in the embodiment of figure 1, in the embodiment of figure 2 the flow-stopping structure 22 is a wedge-shaped structure that has been added to the base material of the raw vehicle part 24 and is made of a different material. Again, the tip of the wedge-shaped structure faces in the downward direction of the inclined surface; accordingly its face opposite of said tip forms an edge 25 that stops the first material 23 from flowing down.

The difference to the embodiment of figure 1 is an embossing 26 in the face opposite to the tip of the wedge, which allows for accommodating additional amounts of the first material 23 which are driven down the inclined surface 21 and is therefore especially well-suited for first materials 23 with a low viscosity and/or that do not dry quickly.

Likewise, in a similar way as in the embodiment of figure 1, in the embodiment of figure 3 the flow-stopping structure 32 is a wedge-shaped structure forming an edge 35, but in this case it has been formed integrally with the raw vehicle part 34, e.g. by suitable adaption of the mould if the raw vehicle part 34 is formed by moulding.

In the embodiment shown in figure 4, the first material 43 is disposed on a first inclined surface 41 and a second inclined surface 46, between which a bottom plane 47 is located. Spilling of the first material 43 onto the bottom plane 47 is prevented by flow-stopping structures 42a, 42b that are realized as ribs.

Finally, the embodiment according to figure 5, is similar to the embodiment of figure 3, but in addition to the wedge-shaped structure 55, an additional flow-stopping structure 56 made of a different material has been added in the transition region between the first material 53 and the second material.

### Reference Numerals

| | |
|---|---|
| 1,2,3,4,5 | automotive vehicle part |
| 11,21,31,41,46,51 | inclined surface |
| 12,22,32,42a,42b,52,56 | flow-stopping structure |
| 13,23,33,43,53 | first material |
| 14,24,34,44,54 | raw automotive vehicle part |
| 15,25,35,45,55 | second material |
| 26 | embossing |
| 47 | bottom plane |

## Claims

1. A method for producing an automotive vehicle part (1, 2, 3, 4, 5) which automotive vehicle part (1, 2, 3, 4, 5) has at least one inclined surface (11, 21, 31, 41, 46, 51), wherein the surface material of a surface area that is either located adjacent to the upper part of said at least one inclined surface (11, 21, 31, 41, 46, 51) or that forms at least an upper part of said at least one inclined surface (11, 21, 31, 41, 46, 51) is a first material (13, 23, 33, 43, 53), and wherein the surface material of a surface area that is either located adjacent to the lower part of said at least one inclined surface (11, 21 31 41 46, 51) or that forms the lower part of said at least one inclined surface (11, 21, 31, 41, 46, 51) is a second material (15, 25, 35, 45, 55) which is different from the first material (13, 23, 33, 43, 53), wherein the first material (13, 23, 33, 43, 53) and the second material (15, 25, 35, 45, 55) are in contact with each other in such a way that a clear, sharp separation edge or borderline is formed between said first material (13, 23, 33, 43, 53) and said second material (15, 25, 35, 45, 55),
wherein the method comprises the step of creating a flow-stopping structure (12, 22, 32, 42a, 42b, 52, 56) at the location where the clear, sharp separation edge is to be formed, wherein this formation is performed prior to a coating step during which the first material (13, 23, 33, 43, 53) is applied.

2. Method according to claim 1, wherein an edge, an embossing, a line, a rib or an elevation are formed to create the flow-stopping structure (12, 22, 32, 42a, 42b, 52, 56) .

3. Method according to claim 1 or 2, wherein the flow-stopping structure (12, 22, 32, 42a, 42b, 52, 56) is integrated into the raw automotive vehicle part (14, 24, 34, 44, 54) and created during the fabrication of the raw automotive vehicle part (14, 24, 34, 44, 54).

4. Method according to claim 1 or 2, wherein the flow-stopping structure (12, 22, 32, 42a, 42b, 52, 56) is formed from a different material than the base material of the raw automotive vehicle part (14, 24, 34, 44 54).

5. Method according to claim 4, wherein the flow-stopping structure (12, 22, 32, 42a, 42b, 52, 56) is formed using 2k-injection moulding techniques.

6. Method according to one of claims 1 to 5, wherein the first material (13, 23, 33, 43, 53) is an ink, a paste, a varnish or paint.

7. Method according to one of claims 1 to 6, wherein the second material (15, 25, 35, 45, 56) is an ink, a paste, a varnish or paint.

8. Method according to one of claims 1 to 6, wherein the second material is the material of the raw automotive vehicle part (14, 24, 34, 44, 54).

9. Method according to one of claim 1 to 8, wherein the second material is transparent or translucent.

10. Method according to one of claims 1 to 10, wherein the raw automotive vehicle part (14, 24, 34, 44, 54) is formed by injection moulding and flooded with polyurethane.
